# EUROPEAN PATENT APPLICATION

(11) **EP 1 569 415 A2**
(43) Date of publication of application: **31.08.2005**
(21) Application number: 05250860.3
(22) Date of filing: 15.02.2005
(51) Int. Cl.: H04L 29/06, G06F 1/00, G06F 17/60

(54) **Information-processing method, information-processing apparatus and computer program**

(30) Priority: 25.02.2004 JP 2004049616
(71) Applicant: SONY CORPORATION, Tokyo 141 (JP)
(72) Inventor: Takabayashi, Kazuhiko c/o Sony Corporation, Tokyo (JP); Nakano, Takehiko c/o Sony Corporation, Tokyo (JP); Minoya, Yasushi c/o Sony Corporation, Shinagawa-ku Tokyo (JP)
(74) Representative: Horner, David Richard

(57) **Abstract**

A content-utilization management server (101) designates a client as a proxy server which checks an external client connected to an external network and registers this external client as a member client having a right to utilize a content managed by the content-utilization management server (101). Then, the proxy server gives a license to the external client as a right to utilize such a content. Thus, the external client not connected to a local network of the content-utilization management server is also capable of utilizing the content based on the license.

## Description

### BACKGROUND OF THE INVENTION

The present invention relates to an information-processing method, an information-processing apparatus and a computer program. More particularly, the present invention relates to an information-processing method for managing utilization of contents in a local-network environment such as a home-network environment, an information-processing apparatus for executing the information-processing method and a computer program prescribing the information-processing method.

The popularization of a network referred to as the Internet in recent years has been leading to frequent utilization of the Internet as a network for distributing a variety of digital contents in the form of mainly computer files. In addition, the popularization of a broad-band communication network such as the xDSL (x Digital Subscriber Line), the CATV (Cable TV) and a radio network is also bringing about a prepared state of a mechanism capable of distributing music data, picture data and digital data including electronic print-outs as well as rich contents such as moving pictures to users without stress.

On the other side of the coin, a distributed content is digital data, which can be subjected to illegal operations such as copying and interpolation with ease. In addition, the illegal operations such as operations to copy and interpolate contents are carried out frequently nowadays. Thus, the illegal operations are a main cause of damaging profits of digital-content vendors. As a result, a vicious cycle occurs as an economical phenomenon in which the prices of the contents must be raised but high prices of digital contents are inevitably a popularization barrier, which requires that the prices be increased further.

For example, in recent years, technologies such as the computer and network technologies have been deeply penetrating ordinary homes. A variety of home information appliances at a home is connected to each other through a home network. Examples of the home information appliances are information apparatus such as personal computers and PDAs (Personal Digital Assistants) as well as television receivers and video reproduction apparatus. In addition, in many cases, such a home network is also connected through a router to an external wide-area network represented mainly by the Internet. First of all, a content acquired legally from an external server on the Internet is stored in an internal server provided at a home as a server connected to the home network. The internal server provided at a home as a server connected to the home network is referred to hereafter as a home server. Then, the content is distributed to another terminal provided at the home by way of the home network. The other terminal provided at the home is referred to as a client.

A copyright law protects a content as a copyrighted work against illegal use such as copying and interpolation of the content. On the other hand, the copyright law allows an authorized user of a copyrighted work to copy the work for the purpose of using the copy privately or the purpose of using the copy within a limited domain conforming to private use, use at a home or other similar use. For details, refer to Article 30 of the copyright law.

When the range of the private use is applied to the home network described above, a client terminal connected to the home network is assumed to be a terminal used privately or used in the domain of the home. Thus, one generally considers that a content acquired legally in the home server can be used with a high degree of freedom by any terminal connected to the home server. Of course, it is necessary to limit the number of terminals allowed to receive a content to a predetermined value.

It is difficult, nevertheless, to utilize the contemporary technology to determine whether a terminal logged in to the home network uses a content in the domain of private use.

Assume for example that the home network is connected to an external network through a router in a connection based on an IP protocol. In this case, for the home network, it is difficult to clearly determine the actual location of a client making an access to the home server. If the home server provides a content to a remote or external terminal making an access to the content, the utilization of the content becomes all but unrestricted. The unrestricted utilization of the content is equivalent to a state of giving no protection to the copyright for the content. As a result, the author of the content loses the eagerness to create further contents.

In addition, if the home server uniformly allows all client terminals connected to the home network to utilize a content, a client terminal may log in to a plurality of home networks at different times so that contents can be utilized all but exhaustedly.

If severe restriction is applied to client terminals, on the other hand, the user can no longer surely enjoy content private utilization, which is naturally allowed by the copyright law. As a result, the user cannot receive contents well. In such a situation, the utilization of services provided by the home server to distribute contents are obstructed so that the content-business development itself is hindered.

Looking at the fact that the user normally purchasing a copyrighted work is allowed to utilize the work with a high degree of freedom, for example, the user may utilize information acquired from the network by copying the information. In this case, there has been proposed a method of easily obtaining understanding from a person holding the copyright of a content. For details of the method, refer to Japanese Patent Laid-open No. 2002-73861. However, the method classifies users in accordance with levels of relations between the users and owners of copyrights of information and the information is distributed by adoption of a distribution method, which varies in dependence on the levels of relations. Thus, the proposed method is not a method to determine how far the domain of the private use covers locations in the network.

As a protocol serving as the base of a home network nowadays, for example, a UPnP (a trademark) is known. In accordance with the UPnP, a network can be constructed with ease without carrying out complicated operations, and a service of providing contents to users can be rendered without carrying out cumbersome operations and with no settings between apparatus connected to the network. In addition, the UPnP has merits that the protocol is independent of the OS (Operating System) and an apparatus can be added with ease.

In the UPnP, a definition file prescribed in an XML (eXtensible Markup Language) format is exchanged between apparatus connected to the network in order for the apparatus to authenticate each other. An outline of pieces of processing for the UPnP is explained as follows.
(1): Addressing processing: A device ID used for identifying a device itself is acquired. An example of the device ID of an apparatus is an IP address assigned to the apparatus.
(2): Discovery processing: The network is searched for devices (apparatus) and information included in a response received from every device is acquired.
   Examples of the information are a device type and device functions.
(3): Service request processing: On the basis of the information acquired in the discovery processing, every device is requested to render a service.

By execution of such a processing procedure, a service applying an apparatus (device) connected to the network can be provided and received. An apparatus newly connected to the network acquires a device ID by carrying out the addressing processing and acquires information on other devices connected to the network by carrying out the discovery processing. Thus, a request for a service can be made.

A content stored in the home server can be accessed by another apparatus connected to the home network. For example, an apparatus executing the UPnP is capable of acquiring a content. If the content is video or audio data, as an apparatus connected to the home network, a TV, a player or the like is capable of acquiring the movie or the music to be enjoyed by the user.

Even for an apparatus connected to the home network, however, it is necessary to consider a measure for coping with illegal accesses to contents. This is because the contents stored in the home server can be contents requiring management of copyrights. Examples of such contents are a private content and a pay content.

An access made by an apparatus of a user owning a license or a right to utilize a content as an access to the content is naturally permitted. In an environment of a home network connected to an external network through a home router, however, it is quite within the bounds of possibility that a user having no license is capable of entering the home network.

In order to get rid of an illegal access, for example, a home server keeps a list of clients each allowed to make an access to the server. Every time a client makes an access to the home server, the client is collated with those on the list. In this way, an access made by a client not on the list can be rejected.

MAC (Media Access Control) address filtering is known as a typical technique to get rid of an illegal access. A MAC address is a physical address assigned to every communication apparatus as an address unique to the apparatus. A list of MAC addresses of apparatus allowed to make accesses to a home network is created as a list used in the MAC address filtering. In accordance with the MAC address filtering, a list of MAC addresses of apparatus allowed to make accesses to a home network is stored in a rooter or a gateway in advance. The rooter or the gateway separates an internal network (or a subnetwork) such as the home network from an external network. Then, when a packet representing an access is received, a MAC address included in the packet is compared with MAC addresses put on the list. An access made by an apparatus having a MAC address not registered on the list in advance is turned down. It is to be noted that a technology of this type is described in documents such as Japanese Patent Laid-open No. Hei 10-271154.

By carrying out the so-called member registration process described above, utilization of contents can be restricted to only predetermined clients each registered in advance to serve as a member client. A content server typically allows a client to be registered to serve as a member client and allows a content to be utilized only if the request for the registration of the client or utilization of the content is made by a client connected to the content server. Thus, in the case of an access coming from an external network such as the Internet as a request for registration of a client or utilization of a content, the request is rejected. In this way, only member clients are allowed to utilize a content.

If content utilization management based on such a list of members is executed, however, there is raised a problem that, even though a client connected to the same home network as the home server becomes a member allowed to utilize contents, for example, an external apparatus capable of making an access to the home server only through the Internet cannot be registered to serve as a member client so that such an external apparatus is not capable of utilizing a content. An example of the external apparatus is a player mounted in a car. With such a car-mounted player, when the user in the car wants to enjoy a piece of music by using the car-mounted player, even though the car-mounted player can be connected to the external Internet, it is difficult to connect directly to the local network of the home server in some cases. As a result, there is raised a problem that the car-mounted player cannot be registered on a member list stored in the home server to serve as a member client and the player is not capable of utilizing a content.

### SUMMARY OF THE INVENTION

An embodiment of the present invention, which alleviates the problems described above, provides an information-processing method for setting a proxy server as a server receiving delegated authority from a server managing utilization of contents in a local-network environment such as a home-network environment and allowing the proxy server to carry out an operation to register a client allowed to utilize a content to serve as a registered member and an operation to issue a license as information on a right to utilize a content so as to implement flexible utilization of the content. An information-processing apparatus for executing the information-processing method, and a computer program prescribing the information-processing method, may also be provided.

In accordance with a first aspect of the present invention, there is provided an information-processing method including: a proxy-server designation step of designating a client as a proxy server by execution of a communication through a local network between a content-utilization management server connected to the local network and the client; and a member registration step of setting and registering an external client to serve as a member client having a right to utilize a content managed by the content-utilization management server on the basis of a result of processing carried out by the proxy server to verify the external client.

Preferably, a communication carried out at the member registration step as a communication between the proxy server and the external client is a communication carried out outside the local network to which the content-utilization management server is connected.

Preferably, the information-processing method further includes a member registration completion notification step of driving the proxy server to inform the content-utilization management server that an operation to register the external client to serve as a member client has been completed.

Preferably, at the proxy-server designation step, as verification processing of a client to be designated as a proxy server, the content-utilization management server carries out a membership confirmation process to confirm membership of the client to be designated as a proxy server by verifying that the client is a member client already registered in the content-utilization management server and a locality confirmation process to confirm locality of the client to be designated as a proxy server by verifying that the client is a client connected to the local network, to which the content-utilization management server is connected, and designates the client as a proxy server on condition that the membership and the locality are confirmed.

Preferably, at the member registration step, as verification processing of the external client, the proxy server carries out a locality confirmation process to confirm locality of the external client by verifying that the external client is a client connected to an external local network to which the proxy server is connected and a member registration process to register the external client to serve as a member client on condition that the locality is confirmed.

In accordance with a second aspect of the present invention, there is provided an information-processing method including: a license-granting right delegation step of permitting a proxy server to grant a license to an external client by carrying out a communication between a content-utilization management server and the proxy server, which are connected to a local network, through the local network; and a license-granting step of granting a license from the proxy server to the external client as a right to utilize a content managed by the content-utilization management server on the basis of a result of a process carried out by the proxy server to verify the external client.

Preferably, a communication carried out at the license-granting step as a communication between the proxy server and the external client is a communication carried out outside the local network to which the content-utilization management server is connected.

Preferably, the information-processing method further includes a license-granting completion notification step of driving the proxy server to inform the content-utilization management server that an operation to grant a license to the external client has been completed.

Preferably, at the license-granting right delegation step, as verification processing of a proxy server, the content-utilization management server carries out a membership confirmation process to confirm membership of the proxy server by verifying that the proxy server is a member client already registered in the content-utilization management server and a locality confirmation process to confirm locality of the proxy server by verifying that the proxy server is a client connected to the local network, to which the content-utilization management server is connected, and delegates a right to grant a license to the proxy server on condition that the membership and the locality are confirmed.

Preferably, at the license-granting step, as verification processing of the external client, the proxy server carries out a locality confirmation process to confirm locality of the external client by verifying that the external client is a client connected to an external local network to which the proxy server is connected and a license-granting process to grant a license from the proxy server to the external client on condition that the locality is confirmed.

In accordance with a third aspect of the present invention, there is provided an information-processing apparatus used as a content-utilization management server, including: a storage unit for storing a member-client list of registered clients each having a right to utilize a content; and a data-processing unit for carrying out a process to verify a proxy server, wherein: the data-processing unit includes: a member-client list management unit for carrying out a membership confirmation process to confirm membership of the proxy server on the basis of the member-client list; and a locality check unit for carrying out a locality confirmation process to confirm locality of the proxy server by verifying that the proxy server is a client connected to a local network, to which the content-utilization management server is connected, and designation of a client as a proxy server or delegation of a right to grant a license to the proxy server is performed on condition that the membership and the locality are confirmed.

In accordance with a fourth aspect of the present invention, there is provided a computer program, which is to be executed to carry out a proxy-server designation process of designating a client as a proxy server by execution of a communication through a local network between a content-utilization management server connected to the local network and the client, including: a membership confirmation step of confirming membership of the client to be designated as a proxy server by verifying that the client is a member client already registered in the content-utilization management server; a locality confirmation step of confirming locality of the client to be designated as a proxy server by verifying that the client is a client connected to the local network, to which the content-utilization management server is connected; and a step of designating the client as a proxy server on condition that the membership and the locality are confirmed.

In accordance with a fifth aspect of the present invention, there is provided a computer program to be executed to carry out a license-granting right delegation process of permitting a proxy server to grant a license to an external client by carrying out a communication between a content-utilization management server and the proxy server, which are connected to a local network, through the local network. The computer program includes: a membership confirmation step of confirming membership of the proxy server by verifying that the proxy server is a member client already registered in the content-utilization management server; a locality confirmation step of confirming locality of the proxy server by verifying that the proxy server is a client connected to the local network, to which the content-utilization management server is connected; and a step of delegating a right to grant a license to the proxy server on condition that the membership and the locality are confirmed.

It is to be noted that the computer programs are each a program that can be presented to typically a computer system capable of executing a variety of program codes. The computer programs are presented to the computer system by storing the programs in a recording medium such as CD, an FD and an MO or by downloading the programs through a communication medium such as a network in the form readable to the computer system. By presenting or downloading the programs to the computer system in the form readable to the computer system, the computer system is capable of carrying out pieces of processing corresponding to the programs.

It is to be noted that the technical term "system" used in this specification means the configuration of a logical confluence comprising a plurality of apparatus, which are not necessarily accommodated in the same housing.

In accordance with a configuration of one embodiment of the present invention, a client is designated as a proxy server by execution of a communication through a local network between a content-utilization management server connected to the local network and the client, and the proxy server verifies an external client before enabling an operation to set and register the external client to serve as a member client having a right to utilize a content managed by the content-utilization management server. Thus, an external client not connected to the same local network as the content-utilization management server can be set as a member. In addition, in the operation carried out by the proxy server to register an external client to serve as a member client, locality of the external client is checked as is the case with a process carried out by the content-utilization management server to check locality of a client. Therefore, it is possible to avoid illegal registration operation.

In accordance with another configuration of an embodiment of the present invention, a right to grant a license to an external client is delegated from a content-utilization management server to a proxy server by carrying out a communication between the content-utilization management server and the proxy server, which are connected to a local network, through the local network, and the proxy server receiving the delegated right to grant a license to an external client verifies the external client before granting a license to the external client as a right to utilize a content managed by the content-utilization management server. Thus, the external client not connected to the same network as the content-utilization management server is also capable of utilizing a content on the basis of the license. In addition, in an operation carried out by the proxy server to grant a license to the external client, the membership of the external client and its locality are confirmed so that incorrect granting of a license to the external client can be avoided.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:
Fig. 1 is a diagram showing a typical configuration of a network to which embodiments of the present invention can be applied;
Fig. 2 is an explanatory diagram showing a typical configuration of an apparatus connected to the network;
Fig. 3 is an explanatory diagram showing a typical configuration of a home network;
Fig. 4 is an explanatory diagram showing a member-client list held by a home server, which is a typical information-processing apparatus provided by an embodiment of the present invention;
Fig. 5 is an explanatory diagram showing a sequence of processes to register a client to serve as a member client;
Fig. 6 is an explanatory diagram showing a configuration of registering an external client to serve as a member client and utilizing a content in the external client;
Fig. 7 is an explanatory diagram showing a sequence of processes to designate a client as a proxy server;
Fig. 8 is an explanatory diagram showing a sequence of processes to register an external client to serve as a member client;
Fig. 9 is an explanatory diagram showing a sequence of processes to report registration of an external client to serve as a member client to the home server;
Fig. 10 is an explanatory diagram showing a sequence of processes to delegate a right to grant a license to a proxy server;
Fig. 11 is an explanatory diagram showing a sequence of processes to give a license to an external client;
Fig. 12 is an explanatory diagram showing a sequence of processes to report an operation to grant a license to an external client to the home server; and
Fig. 13 is a block diagram showing the functional configuration of the home and proxy servers.

### DETAILED DESCRIPTION OF THE PREFERRED EMBODIMENTS

An information-processing method, an information-processing apparatus and a computer program, which are provided by embodiments of the present invention, are explained in detail by referring to diagrams as follows.

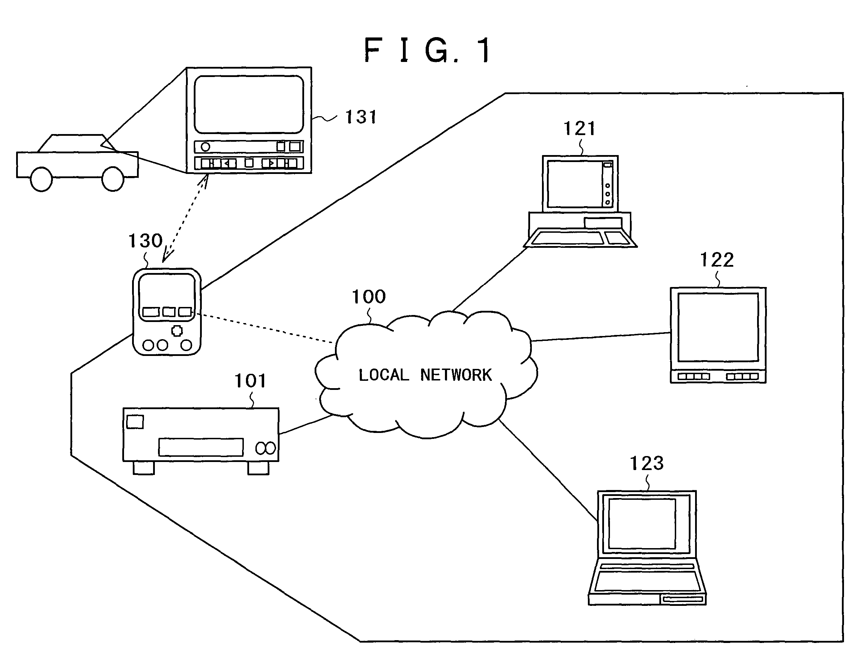

First of all, a typical configuration of a network, to which an embodiment of the present invention can be applied, is explained by referring to Fig. 1. As shown in Fig. 1, the configuration of the network comprises a server 101, a personal computer (PC) 121, a monitor 122 and another PC 123, which are connected to each other by a local network 100. The server 101 is a home server for carrying out processing in accordance with a variety of processing requests such as a request received from a client apparatus as a request for acquisition of a content. The PC 121 functions as a client apparatus issuing a request for processing to the home server 101. An example of the network shown in the figure is a home network. The client apparatus can also be any of a plurality of electronic apparatus or any of a plurality of electric home appliances.

Fig. 1 also shows an external client 131 not connected to the home network 100 and a client 130 functioning as a proxy server of the home server 101. An example of the external client 131 is a video reproduction system mounted on a car or any of various apparatus. Such an apparatus is connected to a local network (other than the local network 100) or the Internet. An example of the local network other than the local network 100 is an enterprise network of a visited company.

The client 130 functioning as a proxy server of the home server 101 is connected to the local network 100 used as a home network in a configuration allowing communications with the home server 101 to be carried out through the local network 100. The client 130 also has a configuration allowing communications with the external client 131 not connected to the local network 100 to be carried out through the other local network (or the Internet) to which the external client 131 is connected. Processing using a proxy server will be described in detail later.

Processing carried out by the home server 101 in accordance with requests made by clients connected to the local network 100 used as a home network includes a process to provide a client with a content stored in a storage unit such as a hard disk employed in the home server 101 and a data-processing service rendered by execution of an application program executable by the home server 101. In the configuration shown in Fig. 1, the home server 101 is shown by being deliberately distinguished from the client apparatus. It is to be noted, however, that a server is defined as an apparatus for rendering services to clients in accordance with requests made by the clients. Thus, any client apparatus providing its own data-processing service to another client apparatus can be regarded as a server. That is to say, such a client apparatus connected to the local network 100 shown in Fig. 1 is also capable of functioning as a server.

The local network 100 can be a wire or radio network. Apparatus connected to the local network 100 exchange communication packets such as Ethernet (a trademark) frames by way of the local network 100. That is to say, a client can request the home server 101 to carry out processing of data by transmitting an Ethernet frame including information on a request for the processing of data in a data portion of the frame to the home server 101. Receiving the request for the processing of data, the home server 101 caries out the processing of data and, if necessary, transmits a result of the data processing to the client by storing the result in the data portion of a communication packet.

An apparatus connected to the local network 100 is typically an apparatus conforming to the UPnP. Thus, a new apparatus can be added to the local network 100 with ease and an existing apparatus can be detached from the local network 100 easily as well. An apparatus newly added to the local network 100 can receive a service rendered by another apparatus connected to the local network 100 by execution of the following processing procedure:
(1): Addressing processing to acquire a device ID used for identifying the apparatus itself. An example of the device ID of an apparatus is an IP address assigned to the apparatus.
(2): Discovery processing to search the local network 100 for devices (apparatus) and acquire information included in a response received from every apparatus. Examples of the information are a device type (apparatus type) and device functions (apparatus functions).
(3): Service request processing to request another device (apparatus) to render a service on the basis of the information acquired in the discovery processing.

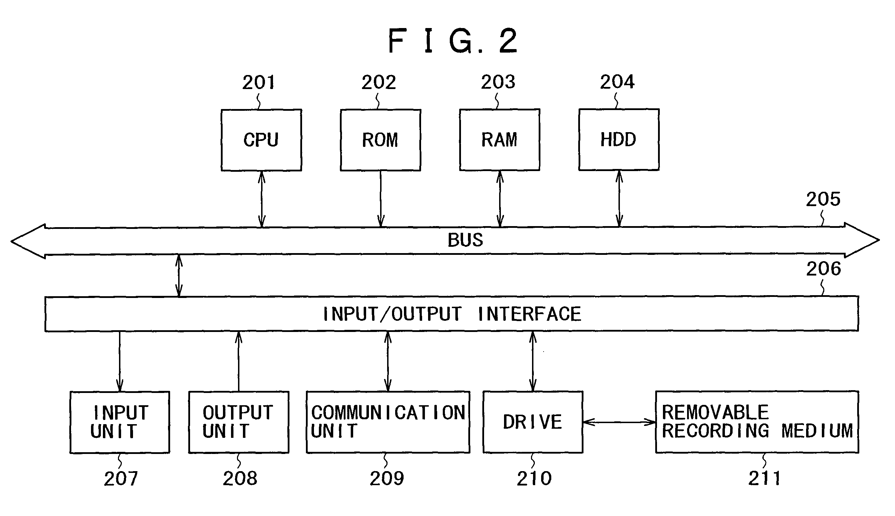

A typical hardware configuration of a PC is explained by referring to Fig. 2. The PC functions as the home server 101 or an information-processing apparatus used as a client in the configuration of the local network 100 shown in Fig. 1.

By execution of programs stored in a storage medium such as a ROM (Read Only Memory) 202 or an HDD (Hard Disk Drive) 204, a CPU (Central Processing Unit) 201 is capable of carrying out various kinds of processing so as to function as a data-processing unit or a communication-control-processing unit. A RAM (Random Access Memory) 203 is used for appropriately storing a program being executed by the CPU 201 and storing data. As shown in the figure, the CPU 201, the ROM 202, the RAM 203 and the HDD 204 are connected to each other through a bus 205.

The bus 205 is also connected to an input/output interface 206. The input/output interface 206 is connected to an input unit 207 and an output unit 208. The input unit 207 comprises a keyboard, switches, buttons and a mouse, which are operated by the user. On the other hand, the output unit 208 comprises an LCD, a CRT and a speaker, which are used for displaying and outputting various kinds of information to the user. The input/output interface 206 is also connected to a communication unit 209 and a drive 210. The communication unit 209 functions as a data transmission/reception unit. On the other hand, the drive 210 is a component for reading out data from a removable recording medium 211 and writing data onto the removable recording medium 211. Examples of the removable recording medium 211 are a magnetic disk, an optical disk, a magneto-optical disk and a semiconductor memory.

The configuration shown in Fig. 2 is a typical configuration of the home server 101 or a PC serving as an apparatus connected to the local network 100 shown in Fig. 1. However, apparatus connected to the local network 100 are not limited to PCs. That is to say, as shown in Fig. 1, the apparatus can be a mobile phone, a portable communication terminal such as a PDA and various kinds of other electronic equipment such as a reproduction apparatus and a display apparatus or an information-processing apparatus. Each of the apparatus connected to the local network 100 can have its unique hardware configuration and carries out processing conforming to the hardware.

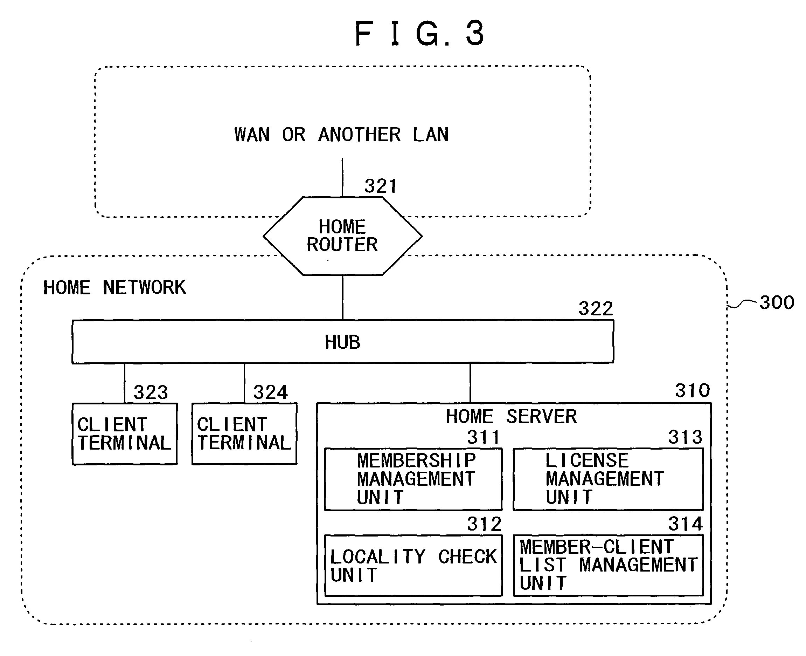

Fig. 3 is a diagram showing a model of the configuration of a home network 300 implemented by an embodiment of the present invention.

As shown in the figure, the home network 300 built at a home is connected to a WAN such as the Internet or another LAN through a home router 321. A default gateway of the home network 300 is set at the home router 321.

The home network 300 is built from a hub 322 and LAN cables connecting the hub 322 to host apparatus such as a home server 310 and client terminals 323 and 324.

The host apparatus such as the home server 310, the client terminals 323 and 324 and the home router 321 in the home network 300 and host apparatus of an external network each have a MAC address unique to the apparatus. A host apparatus exchanges a packet such as an Ethernet (a trademark) frame with another host apparatus by way of networks. The packet includes head information comprising the MAC addresses of the packet sender and the packet recipient.

Typically, the host apparatus such as the home server 310, the client terminals 323 and 324 and the home router 321 in the home network 300 are each an apparatus conforming to the UPnP. In the case of an apparatus conforming to the UPnP, the apparatus can be added to and removed from the home network 300 with ease. As described above, an apparatus newly added to the home network 300 can receive a service such as a content utilization service rendered in the home network 300 by execution of a procedure comprising (1) addressing processing, (2) discovery processing and (3) service request processing.

In the home network 300, a local environment is created. In this local environment, utilization of contents for private use or in the domain of home use is assumed. Thus, the home server 310 legitimately acquires a content from a content server on an external network through the home router 321 and stores the content for later distribution. Then, each of the client terminals 323 and 324 is allowed to request the home server 310 to transmit a desired content and utilize the acquired content.

In the local environment, each of the client terminals 323 and 324 acquires a content from the home server 310 and utilizes the content by, for example, copying or streaming the content. Each of the client terminals 323 and 324 is also capable of taking the acquired content out to the outside of the local environment. For example, each of the client terminals 323 and 324 is allowed to take the acquired content out to a remote environment.

The home server 310 comprises a membership management unit 311, a locality check unit 312, a license management unit 313 and a member-client list management unit 314. When the home server 310 receives a request from a client as a request to transmit a content managed by the home server 310 to the client or a request to register the client to serve as a member client, the home server 310 checks the client by determining whether or not the client pertains to the home network 300. That is to say, the locality check unit 312 checks locality of the client by determining whether or not the client pertains to the home network 300. If the home server 310 determines that the client pertains to the home network 300, the home server 310 processes the request. If a request is received from an external request maker through the home router 321, the request is turned down.

Processing carried out by the locality check unit 312 to check locality of the client is explained as follows. Before starting a service to distribute a content, the home server 310 acquires the MAC address of a default gateway in advance from the home router 321. In this embodiment, the MAC address of the default gateway is the MAC address of the home router 321.

The locality check unit 312 employed in the home server 310 receiving a request for an access fetches the MAC address of a client making the request from a packet received from the client as a packet containing the request. The locality check unit 312 then compares the fetched MAC address with the MAC address of the default gateway, that is, the MAC address previously acquired by the home server 310 itself. If the access has been made by a client connected to the home network 300, the MAC address fetched from the packet is the MAC address of a client making the request. If the access has been made by an access maker outside the local network 100 through the home router 321, on the other hand, a MAC address included in the packet as the MAC address of the access maker is replaced with the MAC address of the home router 321 serving as the default gateway in the course of the packet transmission. Thus, if the fetched MAC address is found the same as the previously acquired MAC address of the default gateway, the access is determined to be an access made by an external access maker. If the fetched MAC address is found different from the previously acquired MAC address of the default gateway, on the other hand, the access is determined to be an access made by an internal access maker connected to the home network 300.

In this way, the home server 310 is capable of easily determining whether or not a client making a request is located in the home network 300, that is, the local environment. If the client making a request is located in the local environment, the requested content is transmitted to the client and a license including information on a limit on the content utilization is issued to the client. If the client making a request is located outside the local environment, on the other hand, the request is turned down. Thus, only a client located in a local environment created in this way is correctly allowed to utilize a content. As a result, illegal distribution of contents can be suppressed effectively.

The processing carried out by the locality check unit 312 to check locality of a client does not have to be carried out in the way described above. That is to say, another method can be adopted. For example, secret information shared by apparatus in the home network 300 is set and included in a packet exchanged between the apparatus. Then, the home server 310 receiving a packet compares secret information included in the packet with the secret information held by the home network 300 itself. If the secret information included in the packet matches its own secret information, the packet is determined to be a packet transmitted by an apparatus in the home network 300. As the secret information shared by apparatus in the home network 300, typically, the MAC address of the home router 321 is used. As an alternative, secret information stored in a local-environment management apparatus provided in the home network 300 or the MAC address of the local-environment management apparatus can be used.

Typical concrete processing is explained as follows. Before each of the client terminals 323 and 324 makes an access to the home server 310, for example, first of all, the client terminal acquires the MAC address of the default gateway from the home router 321 as secret information shared by apparatus in the home network 300. Then, the client terminal writes the acquired MAC address into a packet of a request for the access and transmits the packet to the home server 310. Receiving the packet, the home server 310 compares the secret information included in the packet, that is, the MAC address of the default gateway, with secret information held by the home server 310 itself. If the secret information included in the packet matches the secret information held by the home server 310 itself, the received packet is determined to be a packet transmitted by a client terminal in the home network 300.

The membership management unit 311 employed in the home server 310 executes management of membership of clients on the basis of a list of member clients. The list of member clients is a list of apparatus each connected to the home network 300 as an apparatus having a right to acquire a content. The list of member clients is managed by the member-client list management unit 314. In actuality, the list of member clients is a list of identifiers each identifying an apparatus connected to the home network 300 as a client having a right to acquire a content.

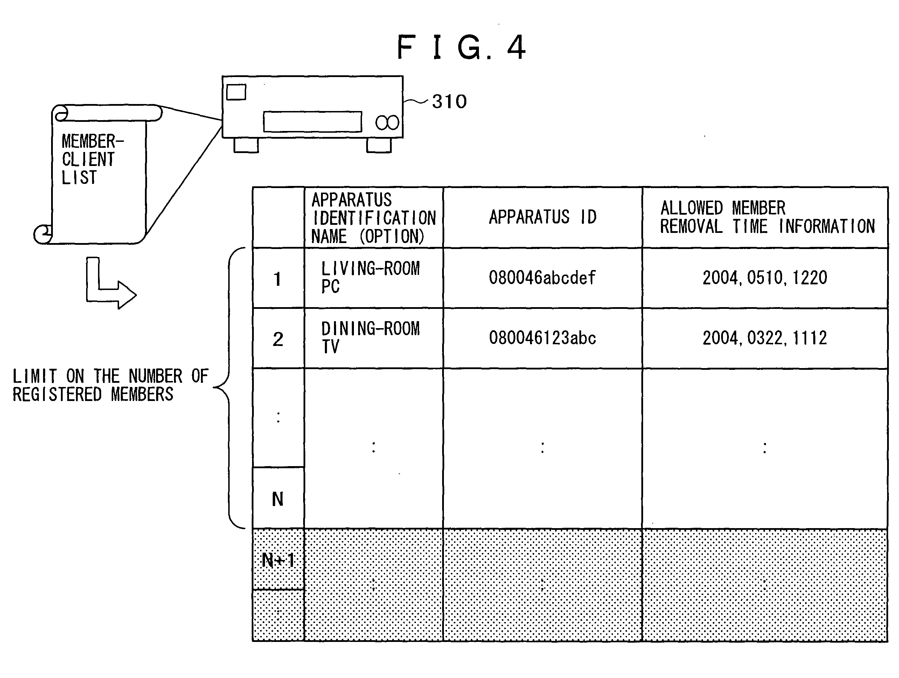

Fig. 4 is a diagram showing a typical list of member clients as a member-client list managed by the member-client list management unit 314. As shown in Fig. 4, the list of member clients comprises a plurality of lines each provided for an apparatus already serving as a member client, which is a client allowed to utilize a content managed by the home server 310. Each line of the member-client list includes a name identifying the apparatus, an ID assigned to the apparatus and information on an allowed member removal time at which the apparatus already serving as a member client can be removed. It is to be noted that, as shown in the figure, the name of an apparatus is an apparatus name that can be recognized by the user with ease. Examples of the apparatus name are a living-room PC and a dining-room TV. The name of an apparatus is optional information though.

An apparatus ID assigned to an apparatus is an ID unique to the apparatus. The MAC address of an apparatus is a typical ID assigned to the apparatus. It is to be noted that the home server 310 acquires the MAC address of an apparatus from the apparatus in a process carried out by the home server 310 to register the apparatus to serve as a member client on the list of member clients.

The member-removal time information indicating a member removal time at which the apparatus already serving as a member client can be removed is typically the latest date among dates each indicating a validity limit of a content provided to the apparatus. When the home server 310 provides or outputs a content to a member client, the client stores the content and a license for the content in typically a hard disk or a flash memory employed in the client terminal as a storage unit. In the license, a condition for utilizing the content is set. An example of the condition is information on a time limit of the content utilization.

A member client is allowed to utilize a content till a time limit set for the content. As a validity time period set by the time limit of the content utilization expires, the member client is allowed to update the time limit or again acquire the content by making an access to the home server 310. However, a client, which has a content with a validity time period not expired yet but gave up its membership, should not be allowed to utilize the content due to the lost membership. This is because it is feared that, for example, a client no longer pertaining to a particular home network deviates from the normal private utilization of a content. That is to say, it is feared that the client utilizes a content by deviation from Article 30 of the copyright law, which states: "An operation to copy a content is allowed if the copying operation is carried out for the purpose of using the copy in a limited domain of private use, use at a home or the like."

In order to avoid such utilization of a content, when the home server 310 receives a request for termination of membership from a client, a license management unit 313 employed in the home server 310 refers to the list of member clients in carrying out a license check process to determine whether or not the validity time period of contents provided to the client has expired. If the validity time period of contents provided to the client has not expired yet, the termination of the membership is not permitted or a process to request the client to return the contents is carried out.

As described above, the home server 310 carries out a process to terminate the membership of a client after confirming that the validity time period of contents provided to the client has expired.

It is to be noted that, as shown in Fig. 4, the upper limit on the number of member clients than can be registered on the list of member clients is set in advance at N, where N is typically 5, 10, 15, 63 or another number. A new client can always be registered on the list of member clients as long as the number of member clients actually cataloged on the list has not reached the upper limit N.

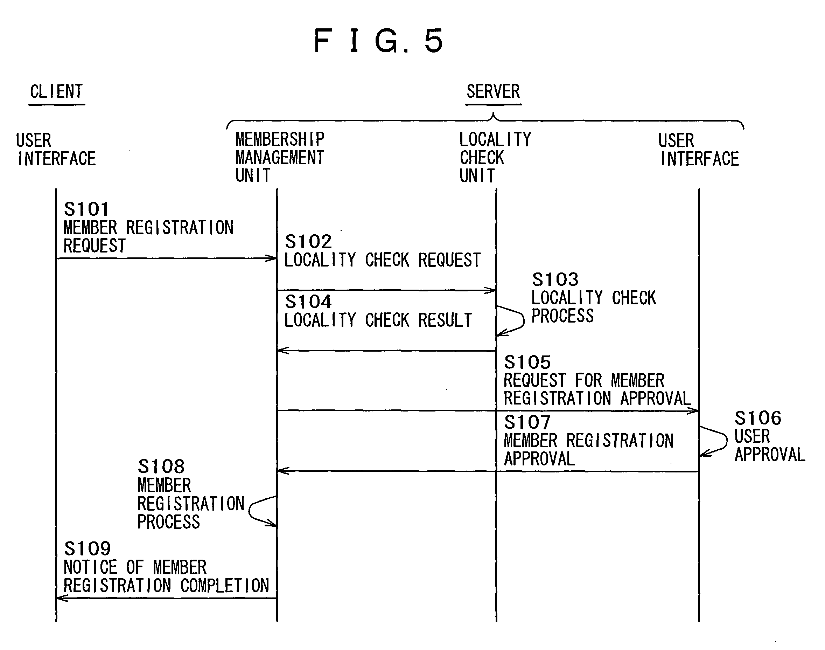

Next, a process to register a member client on the list is explained. Fig. 5 is a diagram showing a sequence of processes to register a member client on the list of client members.

From the left side, Fig. 5 shows processes carried out by a client making a request to register the client itself to serve as a member client on the list of member clients and processes carried out by a server for processing the request received from the client. The processes carried out by the server comprise processes performed by the membership management unit, the locality check unit and a server-side user interface.

First of all, when the user enters a request for a process to register the client to serve as a member client on the list of member clients via a client-side user interface, at a step S101, the client passes on the request to the server. The request for a process to register the client to serve as a member client on the list of member clients is transmitted by carrying out a process to transmit a packet including the identifier (ID) of the client. It is to be noted that the MAC address of the client can be used as the client ID.

Then, at the following step S102, in the server, the membership management unit requests the locality check unit to carry out a locality check process to check locality of the client. Subsequently, at the next step S103, the locality check unit carries out the locality check process to check locality of the client and, at the following step, the locality check unit reports a result of the locality check process to the membership management unit.

The locality check process of the locality check unit is carried out by execution of the same procedure as a locality check process for a request made by a client as a request for a content as will be described later.

To put it in detail, at the step S103, the locality check unit fetches the MAC address of a transmission originator from a request packet received from the client and compares the fetched MAC address with a MAC address acquired in advance by the server and stored in the server as the MAC address of the default gateway. If an access is made by a client of the same network, the MAC address included in the packet of the access as the MAC address of the access maker remains unchanged as it is. If an access is made by a client outside the network through a router, on the other hand, the MAC address included in the packet of the access as the MAC address of the access maker is replaced with the MAC address of the default gateway, which is the router, in the course of the packet transmission. Thus, by comparing the MAC address fetched from the packet with a MAC address acquired in advance by the server and stored in the server as the MAC address of the default gateway, the locality check unit is capable of determining whether the client making the access is a client of the same network, that is, a client in the same environment, or a client outside the network. As an alternative, the locality check unit carries out the locality check process by comparison of common secrete information included in the packet with common secrete information stored in advance in the server instead of comparing MAC addresses.

At the next step S104, the locality check unit reports a result of the locality check process carried out at the step S103 to the membership management unit. If the locality check unit determines that the client making the request to register the client is not a client of the same network, that is, not a client in the same environment, the execution of the sequence of processes is ended without registering the client to serve as a member client on the list of member clients. Note that, in this case, it is also possible to provide a configuration in which the membership management unit transmits a message indicating that the process to register the client is impossible to the client.

If the locality check unit determines that the client making the request to register the client is a client of the same network, that is, a client in the same environment, on the other hand, the flow of the sequence of processes goes on to a step S105 at which the membership management unit requests the server-side user interface to output a request for an approval of an operation to register the client to serve as a member client on the list of member clients. To put it concretely, the server-side user interface is requested to display a user-input request screen on a display unit to the user of the server as a screen requesting the user to enter an input indicating an approval or a disapproval of an operation to register the client to serve as a member client on the list of member clients.

As the user enters an input indicating an approval of an operation to register the client to serve as a member client on the list of member clients at the next step S106, the flow of the sequence of processes goes on to a step S107 at which the server-side user interface passes on the approval to the membership management unit. If the user does not enter an input indicating an approval of an operation to register the client to serve as a member client on the list of member clients at the step S106, on the other hand, the execution of the sequence of processes is ended without registering the client to serve as a member client on the list of member clients. Note that, in this case, it is also possible to provide a configuration in which the membership management unit transmits a message indicating that the process to register the client to serve as a member client cannot be carried out to the client.

If the server-side user interface passes on the approval to the membership management unit at the step S107, the flow of the sequence of processes goes on to a step S108 at which the membership management unit registers the client to serve as a member client on the list of member clients. That is to say, a process is carried out to add an entry describing information on the client to the member-client list described earlier by referring to Fig. 4. It is to be noted that, as explained earlier, the list of member clients has an upper limit on the number of member clients that can be registered on the list. The membership management unit registers the client to serve as a member client on the list of member clients only if the number of member clients actually cataloged on the list has not reached the upper limit. If the number of member clients actually cataloged on the list has reached the upper limit, on the other hand, the membership management unit does not register the client to serve as a member client on the list of member clients.

As the process carried out at the step S108 to register the client to serve as a member client on the list of member clients is completed, the flow of the sequence of processes goes on to a step S109 at which the membership management unit transmits a message to the client as a message informing the client that the process to register the client to serve as a member client on the list of member clients has been completed, and the processing is ended.

As described above, the server verifies the following two things:
(1): locality of the client, that is, the fact that the client is connected to the same home network as the server, and
(2): a clear approval given by the user of the server as an approval of an operation to register the client to serve as a member client on the list of member clients.

The server carries out the operation to register the client to serve as a member client on the list of member clients on condition that the above two things have been verified. Thus, a client is prevented from being registered to serve as a member client on the list of member clients in accordance with a request to register the client on the basis of an access made by a request maker outside the same home network of the server, or prevented from being registered to serve as a member client on the list of member clients without a clear approval given by the user of the server. As a result, strict management of membership can be executed. In addition, utilization of a content is limited to clients connected to the same network as the server so that illegal utilization of the content can be avoided.

In the process to register the client to serve as a member client on the list of member clients, however, an external client not connected to a local network such as the home network of the server cannot be registered on the list. Thus, the sequence of processes described above has a problem of not allowing an external client to utilize a content. In order to allow a process to be carried out as a process to register an external client to serve as a member client on the list of member clients, an embodiment of the present invention introduces the concept of a proxy server. The following description explains processing using a proxy server to register an external client to serve as a member client and processing using the proxy server to grant a right to utilize a content to the external client.

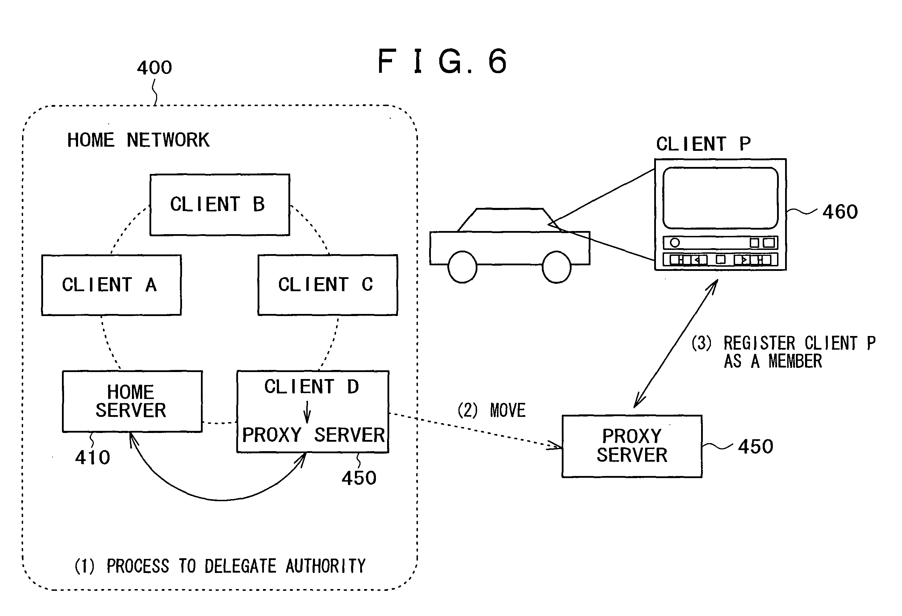

A configuration to make use of a proxy server is explained by referring to Fig. 6. As shown in the figure, the configuration of a home network 400 includes a home server 410 for carrying out processing to manage utilization of contents and clients A to D utilizing contents managed by the home server 410. The home server 410 has a member-client list explained earlier by referring to Fig. 4 as a member-client list for clients A to D. As a matter of fact, the home server 410 carries out the processing to manage utilization of contents on the basis of this list of member clients.

In processing to register a client to serve as a member client on the list of member clients, the home server 410 carries out a process to check locality as explained earlier by referring to the process sequence shown in Fig. 5. That is to say, the home server 410 registers a client to serve as a member client on the list of member clients only after the home server 410 checks the client as a client connected to the home network 400 to which the home server 410 is connected. Thus, an apparatus, which is not connected to the home network 400 as is the case with a client P 460 shown in Fig. 6, cannot be registered to serve as a member client on the list of member clients.

In order to solve the above problem, the home server 410 designates a client already registered to serve as a member client on the list of member clients as a proxy server 450. An example of such a client is client D. A right originally owned by the home server 410 can be delegated to the proxy server 450. An example of the right is a right to register a client to serve as a member client. Later on, the proxy server 450 departs from the home network 400 and is connected to an external network allowing communications with an external client P 460. Examples of such an external network are the Internet and another local network. Then, the proxy server 450 communicates with the external client P 460 through the external network to carry out processing, which should be naturally performed by the home server 410, on behalf of the home server 410. An example of the processing is a process to register the external client P 460 to serve as a member client. By carrying out this process, the external client P 460 can be registered to serve as a member client of the home network 400 to which the home server 410 is connected. That is to say, the external client P 460 can be registered as a recognized member allowed to utilize a content that other regular members are permitted to utilize.

The following description explains detailed processing using a proxy server to register an external client to serve as a member client and detailed processing using the proxy server to grant a right to utilize a content to the external client.

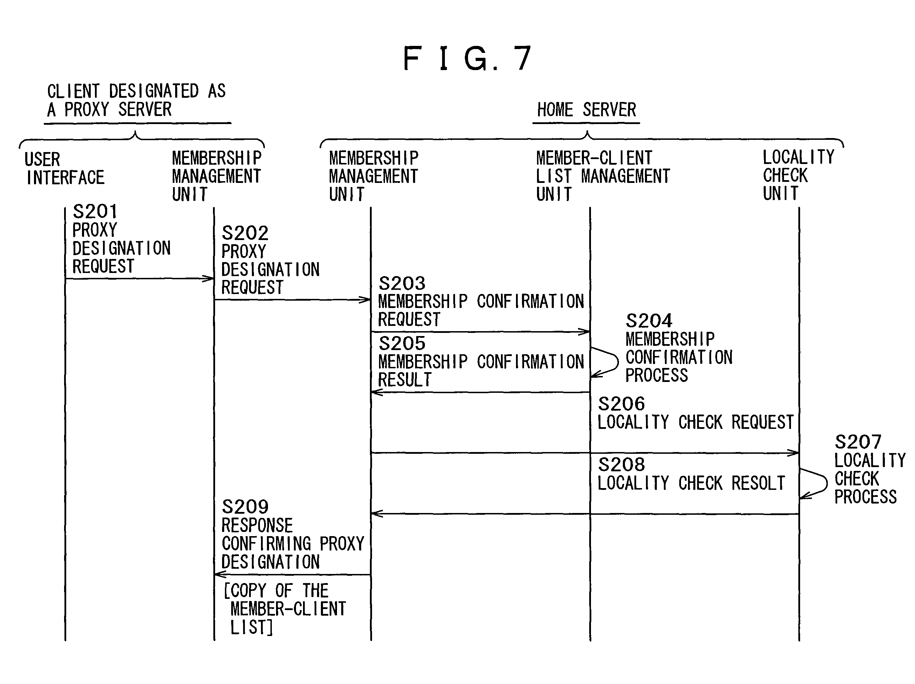

First of all, a sequence of processes using a proxy server to register an external client to serve as a member client is explained by referring to Figs. 7 to 9.

From the left side, Fig. 7 shows processes carried out by a user interface and a membership management unit, which are employed in a client designated as a proxy server. In the left-to-right arrangement, the processes carried out by the membership management unit employed in the client are followed by processes carried out by a membership management unit, member-client list management unit and locality check unit of the home server. It is to be noted that a client settable as a proxy server must be capable of carrying out data processing performed by the home server. The data processing performed by the home server is pieces of data processing carried out by the membership management unit 311, the locality check unit 312, the license management unit 313 and the member-client list management unit 314, which are employed by the home server 310 as shown in Fig. 3.

First of all, when the user of the client terminal enters a request to designate the client as a proxy server via the user interface of the client at a step S201, the membership management unit of the client transmits the proxy designation request to the home server at the next step S202. The proxy designation request transmitted by the client to the home server includes the identifier (ID) of the client. It is to be noted that, as the client identifier (client ID), the MAC address of the client can be used.

Then, at the next step S203, in the home server, the membership management unit of the home server issues a membership verification request to the member-client list management unit to request the member-client list management unit to determine whether or not the client transmitting the proxy designation request is a regular member.

Subsequently, at the next step S204, the member-client list management unit of the home server fetches the client identifier from a request packet received from the client and compares the fetched client identifier with client identifiers registered on the member-client list explained earlier by referring to Fig. 4 to determine whether or not the fetched client identifier matches one of the client identifiers registered on the member-client list. As described earlier, the MAC addresses of clients can be used as the client identifiers. Then, the flow of the sequence of processes goes on to a step S205 at which the member-client list management unit informs the membership management unit of a result of the determination. If the fetched client identifier matches one of the client identifiers registered on the member-client list, at the step S205, the member-client list management unit informs the membership management unit that the membership of the client has been confirmed. If the fetched client identifier matches none of the client identifiers registered on the member-client list, on the other hand, at the step S205, the member-client list management unit informs the membership management unit that the membership of the client could not be confirmed. In this case, subsequent processes are cancelled and the processing to designate the client as a proxy server is not carried out. It is to be noted that, in this case, the membership management unit may transmit a message to the client as a message indicating that the processing to designate the client as a proxy server could not be carried out.

If the member-client list management unit informs the membership management unit that the membership of the client has been confirmed at the step S205, at the next step S206, the membership management unit issues a request to check the locality of the client to the locality check unit. Then, at the next step S207, the locality check unit carries out a process to check the locality of the client and reports a result of the process to the membership management unit at the following step.

The process to check the locality of the client is carried out by the locality check unit by adoption of the same method as the locality check process, which is carried out in response to a request made by the client as a request for a content as described before.

To put it in detail, at the step S207, the locality check unit fetches the MAC address of a transmission originator from a request packet received from the client and compares the fetched MAC address with a MAC address acquired in advance by the home server and stored in the home server as the MAC address of the default gateway. If an access is made by a client of the same network, the MAC address included in the packet of the access as the MAC address of the access maker remains unchanged as it is. If an access is made by a client outside the network through a router, on the other hand, the MAC address included in the packet of the access as the MAC address of the access maker is replaced with the MAC address of the default gateway, which is the router, in the course of the packet transmission. Thus, by comparing the MAC address fetched from the packet with a MAC address acquired in advance by the home server and stored in the home server as the MAC address of the default gateway, the locality check unit is capable of determining whether the client making the access is a client of the same network, that is, a client in the same environment, or a client outside the network. As an alternative, the locality check unit carries out the locality check process by comparison of common secrete information included in the packet with common secrete information stored in advance in the home server instead of comparing MAC addresses.

Then, at the next step S208, the locality check unit reports a result of the locality check process carried out at the step S207 to the membership management unit. If the locality check unit determines that the client making the request to designate the client as a proxy server is not a client of the same network, that is, not a client in the same environment, the execution of the sequence of processes is ended without designating the client as a proxy server. It is to be noted that it is also possible to provide a configuration in which the membership management unit transmits a message indicating that the process to designate the client as a proxy server is impossible to the client in this case.

If the locality check unit determines that the client making the request to designate the client as a proxy server is a client of the same network, that is, a client in the same environment, on the other hand, the flow of the sequence of processes goes on to a step S209 at which the membership management unit employed in the home server transmits a response confirming the execution of the operation to designate the client as a proxy server to the membership management unit of the client. It is to be noted that, in this case, the home server also transmits a copy of the member-client list to the client in response to the proxy designation request. Thus, the client designated as a proxy server is capable of registering an external client on the copy of the member-client list as a member client.

It is to be noted that, as described earlier, the list of member clients has an upper limit on the number of member clients that can be registered on the list. The proxy server also registers the client as a member client on the copy of the list of member clients only if the number of member clients actually registered on the list has not reached the upper limit. If the number of member clients actually registered on the list has reached the upper limit, on the other hand, the proxy server does not register the client as a member client on the copy of the list of member clients.

In addition, it is also possible to provide a configuration in which an upper limit is set on the number of settable proxy servers that can be set for the copy of the member-client list in a process to designate a client as a proxy server to receive the copy of the member-client list. Assume for example that the number of clients that can be added to or registered on the original member-client list held by the home server is n. In this case, the upper limit on the number of settable proxy servers is set at any number not exceeding n for the copy of the member-client list.

In the processing described above, a client pertaining to the home network is designated as a proxy server.

As described above, the home server verifies the following two things:
(1): membership of a client making a proxy designation request, and
(2): locality of the client making the proxy designation request, that is, the fact that the client making the proxy designation request is connected to the same home network as the home server.

The home server carries out the operation to designate the client as a proxy server on condition that the above two things have been verified.

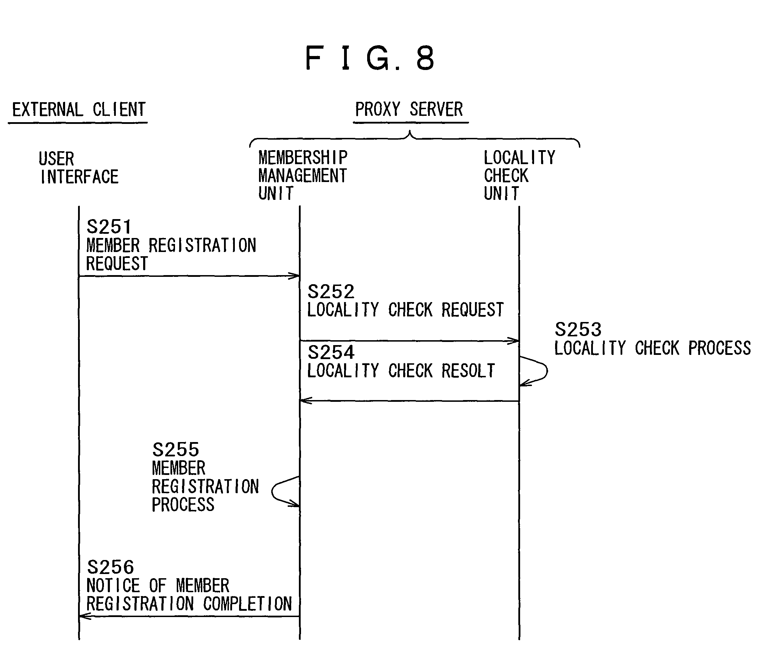

By referring to a sequence of processes shown in Fig. 8, the following description explains processing carried out by a proxy server to register an external client as a member client on the copy of the member-client list.

From the left side, Fig. 8 shows processes carried out by an external client making a request to register itself as a member client on the copy of the list of member clients and processes carried out by a proxy server for processing the request received from the external client. The processes carried out by the proxy server comprise processes performed by a membership management unit and a locality check unit, which are employed in the proxy server.

First of all, when the user enters a request for a process to register the external client as a member client on the list of member clients via a user interface, at a step S251, the external client passes on the request to the proxy server. The request for a process to register the external client to serve as a member client on the list of member clients is transmitted by carrying out a process to transmit a packet including the identifier (ID) of the external client. It is to be noted that the MAC address of the external client can be used as the external client ID.

Then, at the following step S252, in the proxy server, the membership management unit requests the locality check unit to carry out a locality check process to check locality of the external client. Subsequently, at the next step S253, the locality check unit carries out the locality check process to check locality of the external client and, at the following step, the locality check unit reports a result of the locality check process to the membership management unit.

The locality check process of the locality check unit is carried out by execution of the same procedure as the locality check process carried out by the server of the home network.

To put it in detail, at the step S253, the locality check unit employed in the proxy server fetches the MAC address of a transmission originator from a request packet received from the external client as a packet containing the request for a process to register the external client to serve as a member client and compares the fetched MAC address with a MAC address stored in the proxy server in advance as the MAC address of the default gateway of a local network to which the proxy server is connected. It is to be noted that the proxy server has acquired the MAC address of the default gateway in advance. If the request packet received from an external client is an access from the same network as the current network of the proxy server, the MAC address included in the packet of the access as the MAC address of external client serving as the access maker remains unchanged as it is. If the request packet received from an external client is an access made by a client outside the current network through a router, on the other hand, the MAC address included in the packet of the access as the MAC address of the access maker is replaced with the MAC address of the default gateway, which is the router, in the course of the packet transmission. As an alternative, the locality check unit carries out the locality check process by comparison of common secrete information included in the packet with common secrete information stored in the proxy server in advance instead of comparing MAC addresses.

Thus, by comparing the MAC address fetched from the packet with a MAC address acquired by the proxy server and stored in the proxy server in advance as the MAC address of the default gateway, the locality check unit is capable of determining whether the external client making the access is an external client of the same network, that is, an external client in the same environment, or an external client outside the network.

At the next step S254, the locality check unit employed in the proxy server reports a result of the locality check process carried out at the step S253 to the membership management unit. If the locality check unit determines that the external client making the request to register the client is not a client of the same network to which the proxy server is connected, that is, not a client in the same environment, the execution of the sequence of processes is ended without registering the external client to serve as a member client on the copy of the list of member clients. Note that it is also possible to provide a configuration in which the membership management unit transmits a message indicating that the process to register the client is impossible to the external client in this case.

If the locality check unit determines that the external client making the request for a process to register the client is a client of the same network, that is, a client in the same environment, on the other hand, the flow of the sequence of processes goes on to a step S255 at which the membership management unit registers the external client to serve as a member client on a copy of the member-client list.

In the proxy designation process described earlier by referring to the process sequence shown in Fig. 7, the proxy server receives the copy of the member-client list shown in Fig. 4 from the home server and stores the copy of the list. The proxy server registers the external client to serve as a member client on the copy of the member-client list by creating a new entry containing information on the external client on the copy of the member-client list. The information includes the identifier of the external client. It is to be noted that, as explained earlier, the list of member clients has an upper limit on the number of member clients that can be registered on the list. The membership management unit registers the external client to serve as a member client on the copy of the list of member clients only if the number of member clients actually registered on the list has not reached the upper limit. If the number of member clients actually registered on the list has reached the upper limit, on the other hand, the membership management unit does not register the external client to serve as a member client on the copy of the list of member clients.

The membership management unit employed in the proxy server is capable of registering the external client to serve as a member client on the copy of the list of member clients only if the number of member clients actually registered on the list has not reached the upper limit set for the proxy server.

As the process carried out at the step S255 to register the external client to serve as a member client on the list of member clients is completed, the flow of the sequence of processes goes on to a step S256 at which the membership management unit transmits a message to the external client as a message informing the external client that the process to register the external client to serve as a member client on the copy of the list of member clients has been completed, and the processing is ended.

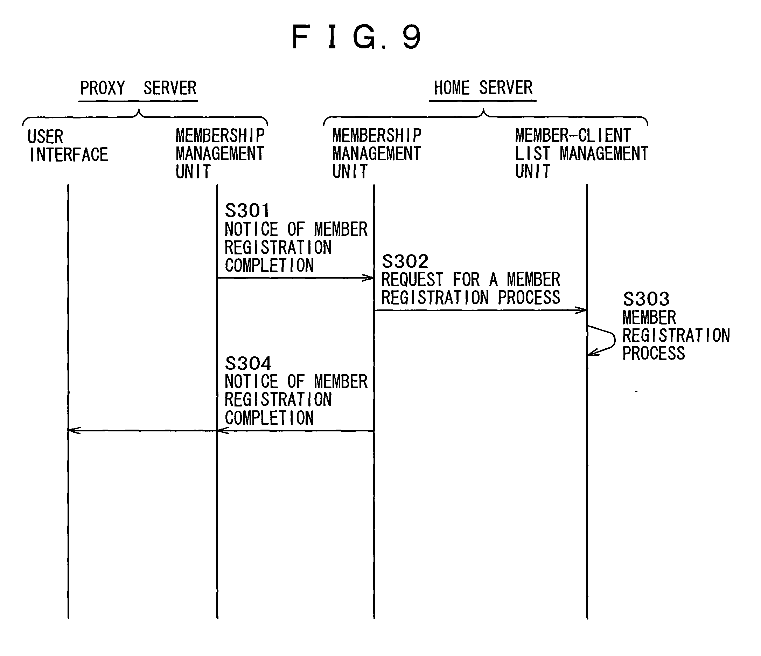

When the proxy server is reconnected to the home server after the process carried out by the proxy server to register an external client not pertaining to the home network connected to the home server as described above, the proxy server informs the home server that the process to register the external client not pertaining to the home network has been carried out. Fig. 9 is a diagram showing a sequence of processes carried out by the proxy server to inform the home server that a process to register an external client not pertaining to the home network has been carried out.

From the left side, Fig. 9 shows processes carried out by a user interface and a membership management unit, which are employed in the proxy server. In the left-to-right arrangement, the processes are followed by processes carried out by a membership management unit and a member-client list management unit, which are employed in the home server.

First of all, at a step S301, the membership management unit employed in the proxy server connected to the home network transmits a notice to the membership management unit employed in the home server as a notice for informing the home server that a process to register an external client not pertaining to the home network has been carried out. The transmitted notice includes the ID of the proxy server and the ID of the newly added/registered external client or the copy of the member-client list including information on registration of the added member.

Receiving the notice of member registration completion from the proxy server, at a step S302, the membership management unit employed in the home server requests the member-client list management unit to newly register the external client on the original list of member clients to serve as a member client. Then, the member-client list management unit registers the external client registered by the proxy server on the original member-client list held by the home server as a new member client.

Subsequently, at the next step S304, the membership management unit employed in the home server informs the proxy server that a process to register the external client on the original member-client list held by the home server as a new member client has been completed.

In the processing described above, the external client registered by the proxy server is registered on the original member-client list held by the home server as a new member client.

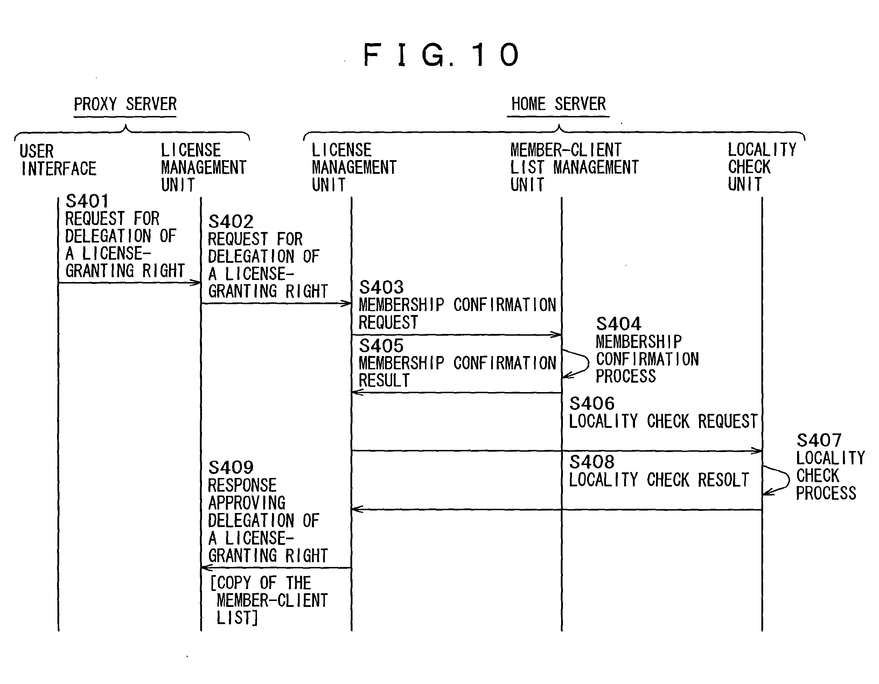

Before an external client registered by the proxy server to serve as a member client is allowed to utilize a content managed by the home server, the external client needs to obtain a license managed by the home server. The external client is also capable of receiving a license through the proxy server. Processing to grant a license to such an external client is explained by referring to Figs. 10 to 12 as follows.

In order for the proxy server to carry out the processing to grant a license to an external client already registered to serve as a member client, first of all, the proxy server needs to receive a permission from the home server as a permission to carry out the processing to grant a license to such an external client. By referring to a process sequence shown Fig. 10, the following description explains processing to delegate a right originally owned by the home server as a right to grant a license to a member client to the proxy server.

From the left side, Fig. 10 shows processes carried out by a user interface and a license management unit, which are employed in the proxy server. In the left-to-right arrangement, the processes are followed by processes carried out by a license management unit, a member-client list management unit and a locality check unit, which are employed in the home server.

First of all, at a step S401, when the user enters a request for delegation of a right to grant a license to the proxy server via the user interface employed in the proxy server, the license management unit employed in the proxy server passes on the request to the license management unit employed in the home server at a step S402. The request passed on by the proxy server to the home server as a request for delegation of a right to grant a license to the proxy server includes the client identifier (the client ID) of the proxy server. The client identifier (the client ID) is an identifier registered on the list of member clients. Typically, the client identifier (the client ID) of a client is the MAC address assigned to the client.

Then, at the next step S403, the license management unit employed in the home server issues a request for confirmation of membership to the member-client list management unit employed in the home server as a request to determine whether or not the proxy server is a regular member client.

Subsequently, at the next step S404, the member-client list management unit employed in the home server fetches the client identifier from a request packet received from the proxy server and compares the fetched client identifier with client identifiers registered on the member-client list explained earlier by referring to Fig. 4 to determine whether or not the fetched client identifier matches one of the client identifiers registered on the member-client list. As described earlier, the MAC addresses of clients can be used as the client identifiers. Then, the flow of the sequence of processes goes on to a step S405 at which the member-client list management unit informs the license management unit of a result of the determination. If the fetched client identifier matches one of the client identifiers registered on the member-client list, at the step S405, the member-client list management unit informs the license management unit that the membership of the proxy server has been confirmed. If the fetched client identifier matches none of the client identifiers registered on the member-client list, on the other hand, at the step S405, the member-client list management unit informs the license management unit that the membership of the proxy server could not be confirmed. In this case, subsequent processes are cancelled and the processing to delegate the right to grant a license to the proxy server is not carried out. It is to be noted that, in this case, the license management unit may transmit a message to the proxy server as a message indicating that the processing to delegate the right to grant a license to the proxy server could not be carried out.

If a message indicating that the membership of the proxy server has been confirmed is received at the step S405, the flow of the process sequence goes on to a step S406 at which the license management unit employed in the home server issues a request to the locality check unit as a request for a process to check the locality of the proxy server. Then, at the next step S407, the locality check unit carries out the process to check the locality of the proxy server and, at the following step, the locality check unit reports a result of the process to the license management unit.

The process carried out by the locality check unit to check the locality of the proxy server is the same as the process carried out in the sequence of processes to designate a client as a proxy server as described earlier. That is to say, this process to check the locality of the proxy server can be carried out by comparison of MAC addresses or comparison of common secret information included in a packet with secret information stored in advance in the home server.

At the following step S408, the locality check unit reports a result of the locality check process carried out at the step S407 to the license management unit. If the proxy server is determined to be a client not existing in the home network of the home server, that is, if the proxy server is determined to be a client not existing in the local environment, the processing is ended without delegating the right to grant a license to the proxy server. Note that it is also possible to provide a configuration in which the home server transmits a message to the proxy server as a message indicating that a process of delegating the right to grant a license to the proxy server could not be carried out in this case.

If the proxy server is determined to be a client existing in the home network of the home server in the locality check process, that is, if the proxy server is determined to be a client existing in the local environment in the locality check process, on the other hand, the flow of the process sequence goes on to a step S409 at which the license management unit employed in the home server transmits a response indicating an approval of the request for delegation of the right to grant a license to the license management unit employed in the proxy server. At that time, the home server also transmits a copy of the member-client list to the proxy server. By using the copy of the member-client list, the proxy server is capable of carrying out a process to verify the membership of an external client and a process to grant a license to an external client.

As described above, the home server verifies the following two things:
(1): membership of the proxy server, and
(2): locality of the proxy server, that is, the fact that the proxy server is connected to the same home network as the home server,

The home server carries out a process to delegate a right to grant a license to an external client to a proxy server on condition that the above two things have been verified.

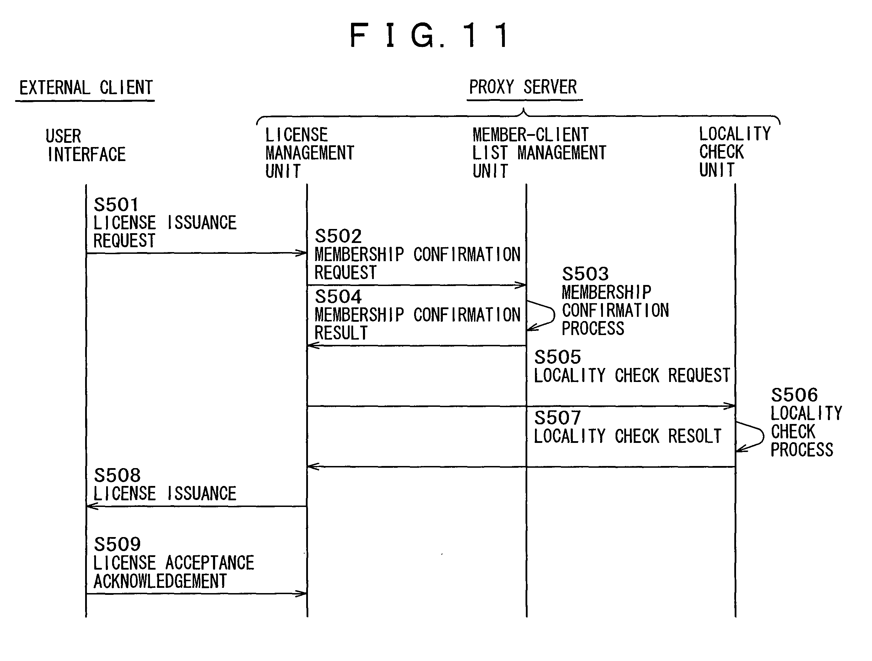

By referring to a sequence of processes shown in Fig. 11, the following description explains processing carried out by a proxy server to grant a license to an external client.

From the left side, Fig. 11 shows processes carried out by a user interface employed in an external client. In the left-to-right arrangement, the processes carried out by the user interface are followed by processes carried out by a license management unit, a member-client list management unit and a locality check unit, which are employed in the proxy server.

First of all, when the user of the external client terminal enters a request for issuance of a license via the user interface of the external client at a step S501, the external client transmits the license-issuance request to the proxy server. The license-issuance request by the external client to the proxy server is performed by carrying out a process to transmit a packet including the identifier (ID) of the external client. It is to be noted that, as the external client identifier (client ID), which is an identifier set in the member-client list, a MAC address assigned to the external client can be used.

Then, at the next step S502, in the proxy server, the license management unit of the proxy server issues a membership verification request to the member-client list management unit to request the member-client list management unit to determine whether or not the external client transmitting the license-issuance request is a regular member.

Subsequently, at the next step S503, the member-client list management unit employed in the proxy server fetches the identifier of the external client from a request packet received from the external client and compares the fetched identifier of the external client with client identifiers registered on a copy of the member-client list in order to determine whether or not the fetched identifier of the external client matches one of the external client identifiers registered on the copy of the member-client list. As described earlier, the MAC addresses of clients can be used as the external client identifiers. Then, the flow of the sequence of processes goes on to a step S504 at which the member-client list management unit informs the license management unit of a result of the determination. If the fetched identifier of the external client matches one of the external client identifiers registered on the copy of the member-client list, at the step S504, the member-client list management unit informs the license management unit that the membership of the external client has been confirmed. If the fetched identifier of the external client matches none of the external client identifiers registered on the copy of the member-client list, on the other hand, at the step S504, the member-client list management unit informs the license management unit that the membership of the external client could not be confirmed. In this case, subsequent processes are cancelled and the processing to issue a license to the external client is not carried out. It is to be noted that, in this case, the license management unit may transmit a message to the external client as a message indicating that the processing to issue a license to the external client could not be carried out.

If the member-client list management unit informs the license management unit that the membership of the external client has been confirmed at the step S504, at the next step S505, the license management unit issues a request to check the locality of the external client to the locality check unit. Then, at the next step S506, the locality check unit carries out a process to check the locality of the external client and reports a result of the process to the license management unit at the following step.

The process to check the locality of the external client is carried out by the locality check unit by adoption of the same method as the locality check process, which is carried out in response to a request made by a client as a request for designating the client as a proxy server at the step S207 of the process sequence described before by referring to Fig. 7. The process to check the locality of the external client is carried out by comparing MAC addresses or pieces of common secret information.

Then, at the next step S507, the locality check unit reports a result of the locality check process carried out at the step S506 to the license management unit. If the locality check unit determines that the external client making the request for issuance of a license is not a client of the same network, that is, not a client in the same environment, the execution of the sequence of processes is ended without issuing a license to the external client. Note that it is also possible to provide a configuration in which the license management unit transmits a message to the external client as a message indicating that the process to issue a license to the external client is impossible in this case.

If the locality check unit determines that the external client making the request to issue a license to the external client is a client of the same network, that is, a client in the same environment, on the other hand, the flow of the sequence of processes goes on to a step S508 at which the license management unit employed in the proxy server issues a license to the external client.

It is to be noted that a license that can be issued by the proxy server to the external client is a license received by the proxy server functioning as a client from the home server.

As described above, in response to a license issued to the external client in the process carried out at the step S508, the external client transmits an acknowledgement of the reception of the license to the license management unit of the proxy server at the next step S509.

As described above, the proxy server issues a license to an external client, which is located outside the home network of the home server but has been registered to serve as a member client, as a right to utilize a content. In the processing to issue the license to the external client, the proxy server confirms the membership of the external client and checks the locality of the client. The license is issued to the external client on condition that the membership of the external client is confirmed and the locality of the client is checked.

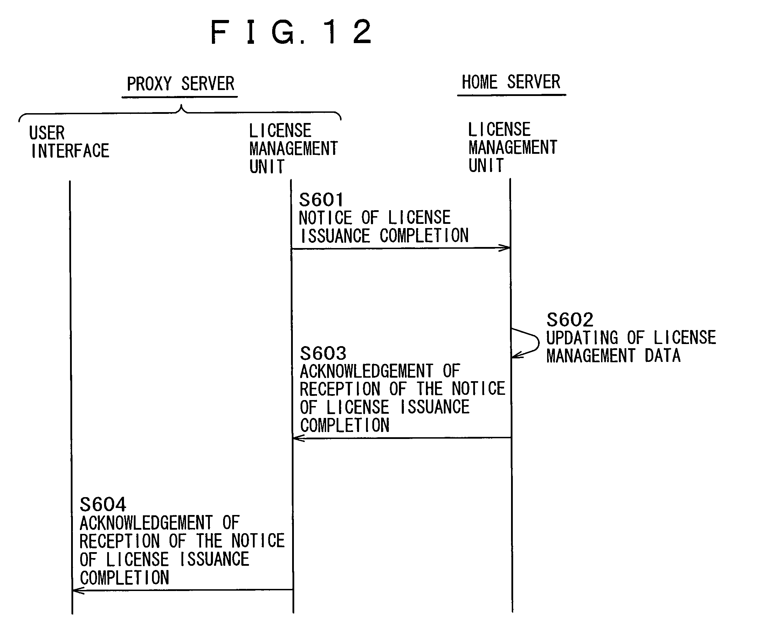

If the proxy server has issued a license to an external client as described above, the proxy server informs the home server that the license has been issued to the external client when the proxy server is reconnected to the home network. Processing carried out by the proxy server to inform the home server that a license has been issued to an external client is explained by referring to a process sequence shown in Fig. 12 as follows.

From the left side, Fig. 12 shows processes carried out by a user interface and a license management unit, which are employed in the proxy server. In the left-to-right arrangement, the processes carried out by the license management unit are followed by processes carried out by a license management unit employed in the home server including an original member-client list.

First of all, at a step S601, the license management unit employed in the proxy server reconnected to the home network transmits a notice indicating completion of a process to issue a license to an external client to the license management unit employed in the home server. The notice indicating completion of a process to issue a license to an external client includes the identifier (ID) of the proxy server and the identifier (ID) of the external client.

Receiving the notice indicating completion of a process to issue a license to an external client, at the next step S602, the license management unit employed in the home server updates data of license management. Then, at the next step S603, the license management unit employed in the home server transmits an acknowledgement of the reception of the notice indicating completion of a process to issue a license to an external client to the proxy server.

Subsequently, at the next step S604, the proxy server displays a message indicating that the acknowledgement of the reception of the notice indicating completion of a process to issue a license to an external client has been received from the home server, and terminates the processing carried out by the proxy server to inform the home server that a license has been issued to an external client. From the message, the user recognizes that the processing has been completed.

By carrying out the pieces of processing described above, an external client is capable of receiving a license from the home server through the proxy server as a right to utilize a content managed by the home server and utilizing the content on the basis of the license.

It is to be noted that, even though a content can be exchanged with a high degree of freedom between apparatus by way of a network as an encrypted content, a key for decrypting the encrypted content is included in a license. Thus, only an apparatus having the license is capable of decrypting an encrypted content and reproducing the decrypted content.

The hardware configurations of the home server, the proxy server and a client apparatus have been explained by referring to Fig. 2. The various kinds of processing described above are carried out by the CPUs employed in the home server, the proxy server and the client apparatus as control units through execution of programs stored in advance in storage units employed in the home server, the proxy server and the client apparatus respectively.

The pieces of processing carried out by the CPUs include the processing to designate a client as a proxy server as shown in Fig. 7, the processing to register an external client to serve as a member client as shown in Fig. 8, the processing to report registration of an external client to serve as a member client to the home server as shown in Fig. 9, the processing to delegate a right to grant a license to a proxy server as shown in Fig. 10, the processing to grant license to an external client as shown in Fig. 11 and the processing to report the granting of a license to an external client to the home server as shown in Fig. 12.

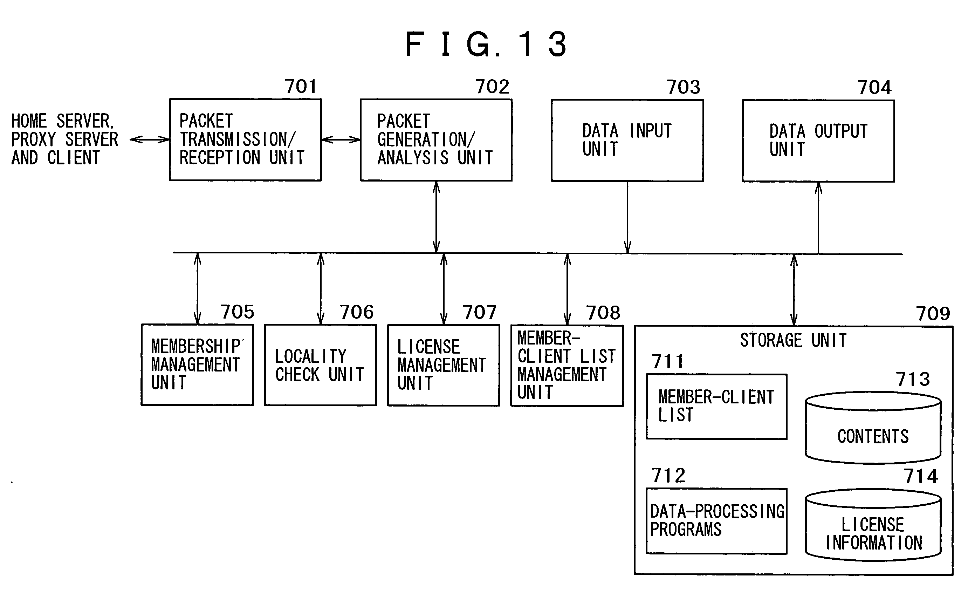

Basically, these pieces of processing are carried out by the CPUs employed in the home server and the proxy server as control units through execution of processing programs stored in advance in storage units employed in the home server and the proxy server respectively. The pieces of processing are carried out by the CPUs employed in the home server and the proxy server as control units as well as pieces of data stored in the storage units employed in the home server and the proxy server are explained by referring to Fig. 13. Fig. 13 is an explanatory block diagram showing a configuration comprising main functional elements of the home and proxy servers.

A packet transmission/reception unit 701 is an element for exchanging a packet with a client serving as a communication partner, a home server or a proxy server. A packet generation/analysis unit 702 is an element for generating a packet to be transmitted and analyzing a received packet. To be more specific, the packet generation/analysis unit 702 carries out processing including operations to set an address of a generated packet, recognize an address of a received packet, store data into a data storage portion of a packet to be transmitted and read out data from the data storage portion of a received packet.

A data input unit 703 includes a keyboard used by the user to enter data inputs and a user interface. A data output unit 704 is an output unit including a display unit for displaying message data or the like.

A membership management unit 705 is an element for managing membership of clients. To put it in detail, the membership management unit 705 executes management of members on the basis of a member-client list 711 stored in a storage unit 709 in a format shown in Fig. 4. It is to be noted that, in the case of a proxy server, the member-client list 711 stored in the storage unit 709 is actually a copy of the original member-client list 711.

The membership management unit 705 executes general control of the processing to designate a client as a proxy server as shown in Fig. 7, the processing to register an external client to serve as a member client as shown in Fig. 8 and the processing to report registration of an external client to serve as a member client to the home server as shown in Fig. 9 and carries out processing including a process to issue a membership confirmation request to a member-client list management unit 708 and a process to issue a locality check request to a locality check unit 706.

The locality check unit 706 is an element for checking the locality of a client or a proxy server. That is to say, the locality check unit 706 determines whether or not the client or the proxy server is located in the same home network as the home server on the basis of the MAC address of a transmission originator or on the basis of common secret information.

A license management unit 707 is an element for executing general control of the processing to delegate a right to grant a license to a proxy server as shown in Fig. 10, the processing to grant license to an external client as shown in Fig. 11 and the processing to report the granting of a license to an external client to the home server as shown in Fig. 12 and carries out processing including a process to issue a request for confirmation of membership to a member-client list management unit 708 and a process to issue a request for check of locality to a locality check unit 706.

The member-client list management unit 708 is an element for managing the list of member clients.

The storage unit 709 is an element for storing the member-client list 711, data-processing programs 712, contents 713 and license information 714 for each of the contents 713. The data-processing programs 712 are programs prescribing the processing to designate a client as a proxy server as shown in Fig. 7, the processing to register an external client to serve as a member client as shown in Fig. 8, the processing to report registration of an external client to serve as a member client to the home server as shown in Fig. 9, the processing to delegate a right to grant a license to a proxy server as shown in Fig. 10, the processing to grant license to an external client as shown in Fig. 11 and the processing to report the granting of a license to an external client to the home server as shown in Fig. 12.

The home and proxy servers each have functions shown as the functional blocks of Fig. 13. The home and proxy servers each execute the data-processing programs 712 under control executed by the CPUs employed in the home and proxy servers respectively as shown in Fig. 2.

The present invention has been explained in detail so far by describing preferred embodiments. It is obvious, however, that a person skilled in the art is capable of modifying and/or replacing the embodiments within a range not departing from essentials of the present invention. That is to say, the embodiments are used merely to exemplify the present invention and should not be interpreted as limitations to the present invention. The essentials of the present invention are determined only by referring to the range of claims.

It is to be noted that a series of processes explained in this specification can be implemented by hardware, software or a combination of hardware and software. If the processing is implemented by software, a software program prescribing the sequence of the processing can be installed in a memory employed in a special-purpose computer embedded in dedicated hardware for later execution. As an alternative, the program to be executed is installed in a memory employed in a general-purpose computer capable of carrying out various kinds of processing.

The memory employed in the computer as a memory for installing the program is typically a hard disk. Instead of installing a program into a hard disk, the program can also be stored in advance in the hard disk. A program installed or stored in advance in the hard disk is then loaded into a RAM for execution by the CPU. Instead of using the hard disk for installing a program or storing the program in advance, the program can also be stored in advance in a ROM (Read Only Memory) in a state of being readily executable by the CPU. In general, a program is installed into a hard disk from a removable recording medium such as a flexible disk, a CD-ROM (Compact-Disk Read Only Memory), an MO (Magneto Optical) disk, a DVD (Digital Versatile Disk), a magnetic disk or a semiconductor memory. Thus, the program is stored (or recorded) in advance in the removable recording medium temporarily or permanently. A program stored (or recorded) in advance in the removable recording medium is presented to the user as the so-called package software.

It is to be noted that, instead of installing a program from a removable recording medium into a hard disk as described above, the program can also be downloaded from a download site to the computer through radio communication, or through wire communication by way of a network such as a LAN (Local Area Network) or the Internet. The computer receives the downloaded program and installs the program into a memory such as a hard disk.

It is also worth noting that various kinds of processing described in this specification can be carried out not only in a pre-prescribed order along the time axis, but also concurrently or individually in accordance with the processing power of an apparatus for carrying out the processing or in accordance with necessity. In addition, the technical term "system" used in this specification implies the configuration of a logical confluence comprising a plurality of apparatus, which are not necessarily accommodated in a single housing.

As described above, in accordance with a configuration of an embodiment of the present invention, by communications between a content-utilization management server and a client through a local network connecting the content-utilization management server to the client, the client can be designated as a proxy server capable of carrying out processing to check an external client connected to an external network and registering and setting the external client to serve as a member client having a right to utilize a content managed by the content-utilization management server. Thus, an external client not connected to the local network of the content-utilization management server can also be registered to serve as a member client. In addition, in a process carried out by the proxy server to register the external client to serve as a member client, locality of the external client is checked in the same way as a process carried out by the content-utilization management server to register a client connected to the local network to serve as a member client. Thus, an operation to illegally register an external client to serve as a member client can be avoided.

In addition, in accordance with another configuration of an embodiment of the present invention, by communications between the content-utilization management server and the proxy server through a local network connecting the content-utilization management server to the proxy server, the content-utilization management server delegates the right to give an external client a license to the proxy server so that the proxy server receiving the delegated right to give an external client a license is capable of giving a license to the external client as a right to utilize a content managed by the content-utilization management server after the proxy server carries out a process to check the external client. Thus, an external client not connected to the local network of the content-utilization management server is also capable of utilizing a content based on a license. In addition, in a process carried out by the proxy server to give a license to an external client, the membership of the external client is verified and the locality of the client is checked so that an operation to illegally give a license to the client can be prohibited.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. An information-processing method comprising:
a proxy-server designation step of designating a client as a proxy server by execution of a communication through a local network between a content-utilization management server connected to said local network and said client; and
a member registration step of setting and registering an external client to serve as a member client having a right to utilize a content managed by said content-utilization management server on the basis of a result of processing carried out by said proxy server to verify said external client.

2. An information-processing method according to claim 1, wherein a communication carried out at said member registration step as a communication between said proxy server and said external client is processing carried out outside said local network to which said content-utilization management server is connected.

3. An information-processing method according to claim 1, further comprising a member registration completion notification step of driving said proxy server to inform said content-utilization management server that an operation to register said external client to serve as a member client has been completed.

4. An information-processing method according to claim 1, wherein, at said proxy-server designation step, as verification processing of a client to be designated as a proxy server, said content-utilization management server carries out a membership confirmation process to confirm membership of said client to be designated as a proxy server by verifying that said client is a member client already registered in said content-utilization management server and a locality confirmation process to confirm locality of said client to be designated as a proxy server by verifying that said client is a client connected to said local network, to which said content-utilization management server is connected, and designates said client as a proxy server on condition that said membership and said locality are confirmed.

5. An information-processing method according to claim 1, wherein, at said member registration step, as verification processing of said external client, said proxy server carries out a locality confirmation process to confirm locality of said external client by verifying that said external client is a client connected to an external local network to which said proxy server is connected and a member registration process to register said external client to serve as a member client on condition that said locality is confirmed.

6. An information-processing method comprising:
a license-granting right delegation step of permitting a proxy server to grant a license to an external client by carrying out a communication between a content-utilization management server and said proxy server, which are connected to a local network, through said local network; and
a license-granting step of granting a license from said proxy server to said external client as a right to utilize a content managed by said content-utilization management server on the basis of a result of a process carried out by said proxy server to verify said external client.

7. An information-processing method according to claim 6, wherein, a communication carried out at said license-granting step as a communication between said proxy server and said external client is processing carried out outside said local network to which said content-utilization management server is connected.

8. An information-processing method according to claim 6, further comprising a license-granting completion notification step of driving said proxy server to inform said content-utilization management server that an operation to grant a license to said external client has been completed.

9. An information-processing method according to claim 6, wherein, at said license-granting right delegation step, as verification processing of a proxy server, said content-utilization management server carries out a membership confirmation process to confirm membership of said proxy server by verifying that said proxy server is a member client already registered in said content-utilization management server and a locality confirmation process to confirm locality of said proxy server by verifying that said proxy server is a client connected to said local network, to which said content-utilization management server is connected, and delegates a right to grant a license to said proxy server on condition that said membership and said locality are confirmed.

10. An information-processing method according to claim 6, wherein, at said license-granting step, as verification processing of said external client, said proxy server carries out a locality confirmation process to confirm locality of said external client by verifying that said external client is a client connected to an external local network to which said proxy server is connected and a license-granting process to grant a license from said proxy server to said external client on condition that said locality is confirmed.

11. An information-processing apparatus used as a content-utilization management server, comprising:
a storage unit for storing a member-client list of registered clients each having a right to utilize a content; and
a data-processing unit for carrying out a process to verify a proxy server,
wherein:
said data-processing unit includes:
a member-client list management unit for carrying out a membership confirmation process to confirm membership of said proxy server on the basis of said member-client list; and
a locality check unit for carrying out a locality confirmation process to confirm locality of said proxy server by verifying that said proxy server is a client connected to a local network, to which said content-utilization management server is connected, and
designation of a client as a proxy server or delegation of a right to grant a license to said proxy server is performed on condition that said membership and said locality are confirmed.

12. A computer program to be executed to carry out a proxy-server designation process of designating a client as a proxy server by execution of a communication through a local network between a content-utilization management server connected to said local network and said client, said computer program comprising:
a membership confirmation step of confirming membership of said client to be designated as a proxy server by verifying that said client is a member client already registered in said content-utilization management server;
a locality confirmation step of confirming locality of said client to be designated as a proxy server by verifying that said client is a client connected to said local network, to which said content-utilization management server is connected; and
a step of designating said client as a proxy server on condition that said membership and said locality are confirmed.

13. A computer program to be executed to carry out a license-granting right delegation process of permitting a proxy server to grant a license to an external client by carrying out a communication between a content-utilization management server and said proxy server, which are connected to a local network, through said local network, said computer program comprising:
a membership confirmation step of confirming membership of said proxy server by verifying that said proxy server is a member client already registered in said content-utilization management server;
a locality confirmation step of confirming locality of said proxy server by verifying that said proxy server is a client connected to said local network, to which said content-utilization management server is connected; and
a step of delegating a right to grant a license to said proxy server on condition that said membership and said locality are confirmed.
